Europäisches Patentamt

European Patent Office

Office européen des brevets

(19)

(11)  EP 0 791 838 B1

(12)  **EUROPÄISCHE PATENTSCHRIFT**

(45) Veröffentlichungstag und Bekanntmachung des Hinweises auf die Patenterteilung:
**11.08.1999  Patentblatt 1999/32**

(51) Int Cl.⁶: **G01S 13/22**

(21) Anmeldenummer: **97101760.3**

(22) Anmeldetag: **05.02.1997**

(54) **Verfahren zur Ermittlung der Geschwindigkeit eines Radarzieles**

Method for measuring the speed of a radar target

Procédé de mesure de la vitesse d'un cible-radar

(84) Benannte Vertragsstaaten:
**DE FR GB NL SE**

(30) Priorität: **15.02.1996  DE 19605568**

(43) Veröffentlichungstag der Anmeldung:
**27.08.1997  Patentblatt 1997/35**

(73) Patentinhaber: **Daimler-Benz Aerospace Aktiengesellschaft**
**81663 München (DE)**

(72) Erfinder:
• **Füchter, Norbert**
**89155 Erbach (DE)**

• **Hofele, Franz-Xaver**
**73072 Donzdorf (DE)**

(74) Vertreter: **Fröhling, Werner, Dr.**
**Daimler-Benz Aerospace AG,**
**Wörthstrasse 85**
**89077 Ulm (DE)**

(56) Entgegenhaltungen:
**EP-A- 0 336 273        EP-A- 0 444 458**
**US-A- 4 057 800        US-A- 4 847 622**
**US-A- 4 924 231**

**Beschreibung**

Die Erfindung betrifft ein Verfahren zur Ermittlung der Geschwindigkeit eines Radarzieles nach dem Oberbegriff des Patentanspruchs 1.

Bei einem Pulsdopplerradar wird eine Folge von Sendepulsen mit einer vorgebbaren konstanten Pulsfolgefrequenz (PRF) ausgesandt. Werden die Sendepulse an einem sich bezüglich des Ortes des Pulsdopplerradars radial bewegenden Radar-ziel reflektiert, so entsteht eine Pulsfolge von Echopulsen mit einer Pulsfolgefrequenz, die bezüglich der Sende-PRF entsprechend der Radialgeschwindigkeit frequenz-verschoben ist.

Mit einem Pulsdopplerradar kann außerdem die Entfernung eines Radarzieles von der Sende-/Empfangsantenne ermittelt werden.

Bei einem solchen Pulsdopplerradar sind sowohl für Entfernung als auch die Geschwindigkeit jeweils ein Eindeutigkeitsbereich vorhanden. Diese Eindeutigkeitsbereiche sind mit der Pulsfolgefrequenz PRF verknüpft entsprechend den Formeln

$$R_{max} = c/(2 \cdot PRF)$$

und

$$0 \le V \le PRF \, ,$$

wobei

$R_{max}$ die maximal eindeutige Reichweite,
c die Lichtgeschwindigkeit und
V die eindeutig bestimmbare Geschwindigkeit

bedeuten.

Aufgrund dieses Sachverhalts kann entweder mit einer niedrigen PRF ("Low PRF", LPRF), beispielsweise 1 kHz, ein großer Entfernungs-Eindeutigkeitsbereich gewählt werden oder mit einer hohen PRF ("High PFR", HPRF), beispielsweise 100 kHz, ein großer Geschwindigkeits-Eindeutigkeitsbereich.

Ist nun für eine Überwachungsaufgabe sowohl ein großer eindeutiger Entfernungsbereich als auch ein großer eindeutiger Geschwindigkeitsbereich erforderlich, so ist es naheliegend, eine Radaranlage mit umschaltbarer PRF zu wählen. Mit einer solchen Radaranlage ist während einer Pulsfolge (Burst) entweder die Entfernung oder die Geschwindigkeit eines Radarzieles eindeutig bestimmbar. Weiterhin können mehrere PRFs so gewählt (gestaffelt) werden, daß aus den Einzelmessungen für Entfernung (Range) sowie Geschwindigkeit (Doppler), die einzeln für sich mehrdeutig sein können, durch eine geeignete Kombination der Messungen sowohl die Entfernung, als auch die Geschwindigkeit eindeutig bestimmt werden können.

Aus der US-PS 4.057.800 ist ein Signalverarbeitungssystem für ein mit mehreren Pulsfolgefrequenzen arbeitendes Dopplerradar bekannt, bei dem das empfangene Signal einer Doppler-Filterbank mit einer Mehrzahl von Filterschaltungen für jede Pulsfolgefrequenz zugeführt wird. Die Ausgangssignale der Filterschaltungen werden jeweils über Schwellwertschaltungen geführt und zusammen mit der zugehörigen Pulsfolgefrequenz in einem Speicher gespeichert. Wenn bei zwei verschiedenen Pulsfolgefrequenzen Zielsignale auftreten, werden die beiden entsprechenden Datensätze weiter verarbeitet. Der erste Datensatz dient zur Bestimmung der Größe der Dopplerbandverschiebung, die erforderlich ist, um die Mitte des Geschwindigkeitsbandes auf die Mitte des Filterbandes zu verschieben. Mit dieser Verschiebung wird der zweite Datensatz beaufschlagt, aus dem das entsprechende Geschwindigkeitsband ermittelt wird. Beide Geschwindigkeitsbänder werden mit Hilfe des Chinesischen Restsatz-Theorems in ein eindeutiges Geschwindigkeitsband umgewandelt.

Der Erfindung liegt die Aufgabe zugrunde, ein Verfahren anzugeben, mit dem auch bei einer vorgebbar niedrigen Pulsfolgefrequenz ein vorgebbar großer eindeutiger Geschwindigkeitsbereich ermöglicht wird.

Diese Aufgabe wird gelöst durch die in dem kennzeichnenden Teil des Patentanspruchs 1 angegebenen Merkmale.

Vorteilhafte Ausgestaltungen und/oder Weiterbildungen der Erfindung sind den weiteren Ansprüchen entnehmbar.

Ein erster Vorteil der Erfindung besteht darin, daß eine schnelle Ermittlung der Geschwindigkeit eines Radarzieles möglich wird, da lediglich eine einzige Tabelle benötigt wird zur Abschätzung des Eindeutigkeitsbereiches.

Ein zweiter Vorteil besteht darin, daß eine sehr zuverlässige Bestimmung einer eindeutigen Geschwindigkeit ermöglicht wird, da Meßfehler korrigiert werden können, welche insbesondere auf einem schlechten Störspannungsabstand beruhen.

Ein dritter Vorteil besteht darin, daß eine sehr genaue und zuverlässige Geschwindigkeitsschätzung verwendet wird. Damit werden fehlerhafte Messungen erkannt und durch einen Algorithmus zur Korrektur von Doppler-Nummern korrigiert.

Ein vierter Vorteil besteht darin, daß durch die Korrektur der Doppler-Nummern die Geschwindigkeit eines Zieles in dem gewählten PRF-Bereich für die verwendeten Bursts zuverlässig gemessen wird. Eine nachfolgende Hochfaltung dieser gemessenen Geschwindigkeit oder der zugehörigen Doppler-Nummern mittels des Chinese-Algorithmus führt zu einem ebenso genauem Ergebnis in dem vorgebbaren eindeutigem Geschwindigkeitsbereich.

Ein fünfter Vorteil besteht darin, daß durch die Korrektur der Doppler-Nummern und deren Hochfaltung mittels des Chinese-Algorithmus im allgemeinen lediglich vernachlässigbare Ausblendbereiche, in denen unsichere Geschwindigkeitsschätzungen auftreten könnten, entstehen.

Weitere Vorteile ergeben sich aus der nachfolgenden Beschreibung.

Die Erfindung wird im folgenden anhand von Ausführungsbeispielen näher erläutert unter Bezugnahme auf schematisch dargestellte Zeichnungen.

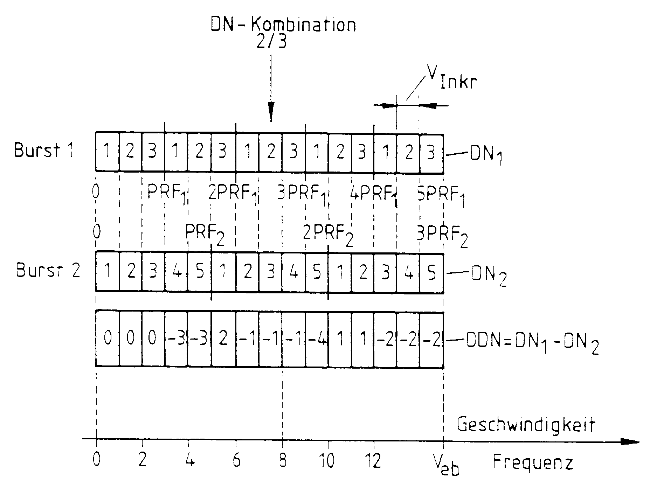

Die Figur zeigt ein schematisch dargestelltes Diagramm zur Erläuterung der Erfindung.

Bei der Erfindung werden in an sich bekannter Weise von einer Sendeantenne zeitlich nacheinander Sende-Pulsfolgen (Bursts) mit unterschiedlicher Pulsfolgefrequenz (PRF) ausgesandt, welche in einem vorgebbaren Verhältnis zueinander stehen, was nachfolgend näher erläutert wird. Es werden zeitlich alternierend mindestens zwei unterschiedliche PRFs verwendet. Für besonders zuverlässige Messungen der Geschwindigkeit eines Radarzieles ist es vorteilhaft, zeitlich alternierend immer drei unterschiedliche PRFs zu verwenden. Die von allen Sende-Pulsfolgen erzeugten Echosignale (Echo-Pulsfolgen), die von einem sich radial bewegten Radarziel durch Reflexion der Sende-Pulsfolgen entstehen, werden vorzugsweise in einem allen PRFs gemeinsamen Empfangspfad in den Videobereich (Basisband) herabgemischt und in analoger oder vorzugsweise digitaler Form einer einzigen an sich bekannten analog beziehungsweise digital arbeitenden Doppler-Filterbank zugeleitet. Diese enthält eine vorgebbare Anzahl, beispielsweise acht, von analog beziehungsweise digital arbeitenden Doppler-Filtern, welche immer einen vorgebbaren, relativen Frequenzbereich umfassen, beispielsweise von 0 Hz bis zu der Pulswiederholfrequenz PRF. Das heißt dieser Doppler-Frequenzbereich (Geschwindigkeitsbereich) ist immer in dieselbe Anzahl von Doppler-Frequenzintervalle (Geschwindigkeitsintervalle) unterteilt, unabhängig von dem Absolutwert der PRF. Ist die Anzahl der Geschwindigkeitsintervalle pro PRF gleich DF, so kann die Geschwindigkeit in bekannter Weise mit einer Genauigkeit von ungefähr PRF/DF ermittelt werden. Die derart für eine bestimmte PRF ermittelte Geschwindigkeit ist bekannterweise nur bei hoher PRF eindeutig.

Eine Bestimmung der Eindeutigkeit der Geschwindigkeit ist möglich mit folgendem Verfahren, dessen einzelne Verfahrensschritte zunächst zusammenfassend und dann einzeln beschrieben werden.

1. Entsprechend der Figur wird ein eindeutiger Geschwindigkeitsbereich $V_{eb}$ vorgegeben. Das heißt, in dem Geschwindigkeitsbereich 0 bis $V_{eb}$ soll eine eindeutige Geschwindigkeitsmessung möglich sein. Dabei ist der eindeutige Geschwindigkeitsbereich $V_{eb}$ (eindeutiger (Doppler-)Frequenzbereich) in eine vorgebbare Anzahl von Geschwindigkeitsinkrementen $V_{Inkr}$ (Frequenzinkremente) unterteilt.

2. Es werden nun zeitlich alternierend mindestens zwei Bursts (Burst 1, Burst 2) ausgesandt, welche unterschiedliche Pulswiederholfrequenzen $PRF_1$, $PRF_2$ besitzen. Es ist besonders vorteilhaft, zeitlich alternierend mindestens drei Bursts (Burst 1, Burst 2, Burst 3) mit den zugehörigen Pulswiederholfrequenzen $PRF_1$, $PRF_2$, $PRF_3$ auszusenden, was nachfolgend noch genau erläutert wird. Denn mit drei Bursts ist eine sehr gute Fehlerkorrektur möglich.

3. Bei jedem Burst i mit i = 1, 2, 3 wird die zugehörige Pulswiederholfrequenz $PRF_i$ (i = 1, 2, 3) so gewählt, daß sie einem vorgebbaren ganzzahligen Vielfachen $N_i$ (i = 1, 2, 3), das auch Staffelzahl genannt wird, des Geschwindigkeitsinkrements $V_{Inkr}$ entspricht, entsprechend den Formeln

$$VB_i = N_i \cdot V_{Inkr} \text{ und } PRF_i \sim VB_i,$$

wobei - das Proportionalzeichen bezeichnet und $VB_i$ die zu den $PRF_i$ gehörenden Blindgeschwindigkeiten bedeuten, welche beispielsweise rechnerisch und/oder empirisch ermittelt werden. Das Verhältnis zweier Staffelzahlen, beispielsweise $N_1/N_2$, wird auch Staffelverhältnis SV genannt, hier beispielsweise $SV = N_1/N_2$.

4. Die in jeder $PRF_i$ enthaltenen Geschwindigkeitsinkremente $V_{Inkr}$ werden durchnumeriert und dann Doppler-Nummern $DN_i$ genannt. Entsprechend der Figur gilt dann beispielsweise für

Burst 1:     $1 \leq DN_1 \leq 3$
Burst 2:     $1 \leq DN_2 \leq 5$.

5. Der zu jeweils zwei Bursts gehörende eindeutige Geschwindigkeitsbereich $V_{eb}$ wird entsprechend der Figur so gewählt, daß die folgende Formel gilt:

$$V_{eb} = N_2 \cdot VB_1 = N_1 \cdot VB_2 \text{ und } PRF_i \sim VB_i.$$

Aus der Figur ist ersichtlich, daß bei einer derartigen Wahl der Pulswiederholfrequenzen $PRF_1$, $PRF_2$ innerhalb des eindeutigen Geschwindigkeitsbereichs $V_{eb}$ jede Kombination der Doppler-Nummern $DN_1$, $DN_2$ nur ein einziges Mal vorkommt. Daraus ergibt sich, daß für jede Pulswiederholfrequenz $PRF_1$, $PRF_2$ zunächst eine zugehörige Doppler-Nummer $DN_1$, $DN_2$ gebildet werden muß. Aus der resultierenden Kombination, wobei die Reihenfolge der DN-Nummern beachtet werden muß, ist dann eindeutig die gesuchte Geschwindigkeit (in Einheiten des Geschwindigkeitsinkrementes $V_{Inkr}$) innerhalb des eindeutigen Geschwindigkeitsbereichs $V_{eb}$ bestimmbar. Aus der Figur ist ersichtlich, daß beispielsweise die durch einen Pfeil markierte DN-Nummern-Kombination 2, 3 nur ein einziges Mal vorkommt.

Die vorstehend erwähnten Parameter werden beispielsweise nach folgendem Verfahren bestimmt:

Entsprechend der eingangs erwähnten Formel für den eindeutigen Entfernungsbereich wird zunächst die zugehörige PRF für einen zu überwachenden Entfernungsbereich gewählt, beispielsweise 2 kHz für ein Bodenradar. Daraus und aus der verwendeten Sendefrequenz, beispielsweise 2 GHz ist eine zugehörige maximale Blindgeschwindigkeit $VB_{max}$ bestimmbar, beispielsweise aufgrund einer experimentellen Messung und/oder aufgrund einer zugehörigen empirischen Formel.

Der gewünschte eindeutige Geschwindigkeitsbereich sei festgelegt durch die Formeln

$$- V_{max} \ldots 0 \ldots + V_{max}$$

oder

$$0 \ldots 2 \cdot V_{max} ,$$

wobei $V_{max}$ die maximal zu messende Geschwindigkeit bedeutet.

Daraus folgt für den eindeutigen Geschwindigkeitsbereich $V_{eb} = 2 \cdot V_{max}$ . Aus den Formeln

$$VB_1 = (2 \cdot V_{max})/N_2$$

und

$$VB_2 = (2 \cdot V_{max})/N_1$$

sind dann die zu den Pulswiederholfrequenzen $PRF_1$, $PRF_2$ gehörenden Blindgeschwindigkeiten $VB_1$, $VB_2$ ermittelbar, wobei beispielsweise $VB_2 = VB_{max}$ gesetzt werden kann. Damit ist $N_1$ aus der letzten Formel bestimmbar. Aus dem sogenannten Staffelverhältnis SV mit $SV = N_1 : N_2$ ist dann $N_2$ ermittelbar. Für das Geschwindigkeitsinkrement $V_{Inkr}$ gelten außerdem die Formeln

$$V_{Inkr} = VB_1/N_1 ,$$

$$V_{Inkr} = VB_2/N_2$$

und

$$2 \cdot V_{max} = N_1 \cdot VB_2 = N_2 \cdot VB_1 = N_1 \cdot N_2 \cdot V_{Inkr}.$$

Wird nun das Geschwindigkeitsinkrement $V_{Inkr}$ vorgegeben, das einer geforderten Geschwindigkeitsauflösung entspricht, beispielsweise $V_{Inkr} = \pm 5$ m/s, so sind aus den vorstehend erwähnten Formeln die Größen SV, $PRF_1$, $PRF_2$, $N_1$, $N_2$ ermittelbar. Damit sind die Eigenschaften (Betriebsparameter) der Radaranlage festgelegt.

Zur Ermittlung der Geschwindigkeit eines Radarzieles werden nun zeitlich alternierend Bursts mit unterschiedlichen Pulsfolgefrequenzen $PRF_1$, $PRF_2$ ausgesandt und die zu jeder Pulsfolgefrequenz gehörenden Echosignale einer Doppler-Filterbank, die beispielsweise aus acht Doppler-Filtern besteht, zugeleitet. Jedes der Doppler-Filter erzeugt einen Amplitudenwert $A_k$, wobei k die (Filter-)Nummer des Doppler-Filters bedeutet, beispielsweise $k = 0, 1 \ldots . . 7$. Zu jeder Pulsfolgefrequenz $PRF_1$, $PRF_2$ wird nun diejenige (Filter-)Nummer ermittelt, zu der ein maximaler Amplitudenwert gehört. Zu dieser (Filter-)Nummer, in welcher der maximale Amplitudenwert auftritt, wird dann anhand einer Tabelle, die beispielsweise auf Erfahrungswerten sowie der Art der verwendeten Doppler-Filter beruht, die zu der Pulsfolgefrequenz gehörende Doppler-Nummer DN ermittelt. Dabei ist jeder Pulsfolgefreqenz eine gesonderte Tabelle zugeordnet. Aus diesen beiden Tabellen ergeben sich also die Doppler-Nummern $DN_1$ (für $PRF_1$) und $DN_2$ (für $PRF_2$). Aus dieser Kombination $DN_1$, $DN_2$ kann nun anhand einer Tabelle entsprechend der Figur die genaue Lage dieser eindeutigen Kombination innerhalb des Geschwindigkeits-Eindeutigkeitsbereiches $V_{eb}$, der in Einheiten des Geschwindigkeits-Inkrementes $V_{Inkr}$ unterteilt ist, ermittelt werden.

Entsprechend der Figur steht also die mit einem Pfeil markierte Kombination $DN_1 = 2$, $DN_2 = 3$ an der eindeutigen Lage (Stelle) $DN_{1/2} = 8$. Die gesuchte eindeutige Geschwindigkeit $V_{1/2}$ ergibt sich daher aus der Formel

$$V_{1/2} = DN_{1/2} \cdot V_{Inkr}.$$

Bei dem beschriebenen Verfahren wurde lediglich aus Gründen der Klarheit nur der maximale Amplitudenwert und die diesem zugeordnete (Filter-)Nummer verwendet. Besonders vorteilhaft ist nun eine Art Interpolation zwischen den (Filter-)Nummern. Damit ist letztendlich eine sehr genaue Bestimmung der Geschwindigkeit möglich. Diese Interpolation beruht darauf, daß sich im allgemeinen die Durchlaßbereiche benachbarter Doppler-Filter in vorgebbarer Weise überlappen. Für die Interpolation wird nun für jede Pulswiederholfrequenz zunächst, wie beschrieben, diejenige Filter-Nummer ermittelt, in welcher das Maximum der Amplitudenwerte $A_k$ auftritt. Es werden nun sowohl diese Filter-Nummer (FI_1) sowie der zugehörige maximale Amplitudenwert gespeichert. Anschließend wird von den benachbarten Filtern dasjenige ausgewählt, in welchem der zweitgrößte Amplitudenwert auftritt und wieder die zugehörige Filter-Nummer (FI_2) sowie der dazu gehörige Amplitudenwert gespeichert. Die erwähnte Tabelle zur Ermittlung der Doppler-Nummern DN ist nun in Abhängigkeit von den beiden Filter-Nummern FI_1, FI_2 sowie dem Quotienten der zugehörigen Amplitudenwerte ausgelegt. Es ist ersichtlich, daß damit in vorteilhafter Weise eine sehr genaue und zuverlässige Bestimmung der Doppler-Nummern möglich wird.

Dieses Verfahren zur Bestimmung der Doppler-Nummern kann fehlerhaft sein, beispielsweise aufgrund von Quantisierungseffekten bei der Ermittlung der Amplitudenwerte und/ oder durch Rauschen, welches den auszuwertenden Zielechos überlagert ist. Fehlerhafte Doppler-Nummern können zu einer erheblichen Fehlschätzung der Geschwindigkeit im Geschwindigkeits-Eindeutigkeitsbereich führen, was anhand der Figur erläutert wird. Dort ist angenommen, daß bei einem Radar-Ziel beim Burst 1 ($PRF_1$) die zugehörige richtige Doppler-Nummer $DN_1 = 2$ ermittelt wurde. Bei dem zeitlich folgenden Burst 2 ($PRF_2$) wurde für dasselbe Radarziel die zugehörige richtige Doppler-Nummer $DN_2 = 3$ ermittelt. Es entsteht also die richtige Kombination 2, 3 (Pfeil), zu welcher die richtige Geschwindigkeit $V_{1/2} = 8 \cdot V_{Inkr}$ gehört. Wird nun angenommen, daß beim Burst 1 ($PRF_1$) die Doppler-Nummer $DN_1$ um den Fehlerwert $dDN_1 = \pm 1$ schwanken kann, so ergeben sich zusätzlich die falschen Kombinationen 1, 3 und 3, 3, zu denen die falschen Geschwindigkeiten $V_{1/2} = 13 \cdot V_{Inkr}$ beziehungsweise $V_{1/2} = 3 \cdot V_{Inkr}$ gehören.

Derartige Fehlschätzungen können nun in überraschender Weise erkannt und korrigiert werden mittels der nachfolgend beschriebenen Doppler-Nummern-Korrektur, welche besonders wichtig ist für eine genaue sowie zuverlässige Schätzung der Geschwindigkeit. Diese Korrektur ist möglich durch die Ermittlung einer Doppler-Nummern-Differenz DDN mit $DDN = DN_1 - DN_2$. Diese Differenzbildung ist inbesondere bei einer Verwendung hoher Doppler-Nummern wirksam und bei Verwendung von Pulsfolgefrequenzen, die sich lediglich geringfügig unterscheiden. Wird beispielsweise $N_1 = 11$ und $N_2 = 12$ gewählt, so bedeutet dieses, daß gegenüber der Figur die PRF-Intervalle wesentlich feiner unterteilt sind, das heißt es ist eine größere Geschwindigkeitsauflösung innerhalb des Geschwindigkeits-Eindeutigkeitsbereiches möglich. Es ist ersichtlich, daß insbesondere bei einer solchen Wahl der Pulsfolgefrequenzen (Staffelverhältnis $SV = N_1 : N_2$) lediglich bestimmte diskrete, erlaubte Doppler-Nummern-Differenzen DDN auftreten können. Diese erlaubten Differenzen sind in ersichtlicher Weise von $N_1$, $N_2$ abhängig und beispielsweise anhand einer Tabelle entsprechend der Figur ermittelbar.

Werden nun bei jeder Messung immer die Doppler-Nummern-Differenzen DDN ermittelt, so kann durch einen Vergleich entschieden werden, ob diese Differenzen für das vorliegende Staffelverhältnis SV gültige Differenzen sind. In diesem Fall wird die Geschwindigkeitsmessung als richtig betrachtet und in der beschriebenen Weise ausgewertet, das heißt $V_{1/2}$ gebildet.

Ist die Doppler-Nummern-Differenz dagegen keine für das vorliegende Staffelverhältnis SV gültige Differenz, so ist die Messung entweder falsch und muß wiederholt werden oder es kann sogar in überraschender Weise eine Korrektur durchgeführt werden. Diese beruht auf der Erkenntnis, daß für ein vorgegebenes Staffelverhältnis SV die zugehörigen Doppler-Nummern-Differenzen lediglich erlaubte diskrete Doppler-Nummern-Differenz-Werte annehmen können. Die Korrektur beruht auf der Annahme, daß bei einer PRF, beispielsweise $PRF_2$, aufgrund der technischen Eigenschaften der Radaranlage immer eine zuverlässige Ermittlung der zugehörigen Doppler-Nummer, hier $DN_2$, möglich ist. In diesem Fall kann also nur $DN_1$ fehlerhaft sein. Mit der weiteren Annahme, daß $DN_1$ lediglich einen vorgebbaren Fehler $dDN_1$ von beispielsweise $dDN_1 = \pm 1$ besitzen kann, lassen sich in ersichtlicher Weise Korrekturregeln ableiten, die beispielsweise empirisch ermittelt sind und von $N_1$, $N_2$ abhängen. Anhand dieser Korrekturregeln und der Kenntnis der erlaubten Differenzen ist dann eine Korrektur einer fehlerhaften Doppler-Nummer, hier $DN_1$, möglich. Beispielsweise gilt für ein Staffelverhältnis $SV = N_1 : N_2$ mit $N_2 - N_1 > 0$ und $N_2 - N_1$ ungerade, daß bei der Korrektur mindestens einer Doppler-Nummer $DN_1$, $DN_2$ genau $\pm(N_2 - N_1 - 1)/2$ Doppler-Nummern korrigierbar sind.

Zu einer derart ermittelten zuverlässigen Kombination $DN_1$, $DN_2$ von Doppler-Nummern muß dann lediglich deren Lage (in Einheiten des Geschwindigkeitsinkrementes $V_{Inkr}$) innerhalb des Geschwindigkeits-Eindeutigkeitsbereiches $V_{eb}$ ermittelt werden. Dieses erfolgt vorzugsweise dadurch, daß die ermittelten Doppler-Nummern $DN_1$, $DN_2$, beispielsweise entsprechend der Figur $DN_1 = 2$, $DN_2 = 3$, solange in zugehörigem $N_i$-Vielfachen (Burst i) hochgefaltet werden, bis beide Doppler-Nummern dieselbe Lage (Stelle) $DN_{1/2}$ (hier $DN_{1/2} = 8$) im Geschwindigkeits-Eindeutigkeitsbereich $V_{eb}$ besitzen. Aus dem Beispiel entsprechend der Figur ergibt sich, daß bei dem Burst 1 ($PRF_1$, $DN_1 = 2$) eine zweimalige Hochfaltung (jeweils um $N_1 = 3$) erforderlich ist, während bei dem Burst 2 ($PRF_2$, $DN_2 = 3$) lediglich eine einmalige Hochfaltung (um $N_2 = 5$) genügt. Es ist ersichtlich und wichtig, daß für eine solche Hochfaltung das Staffelverhältnis SV so gewählt ist, das die zugehörigen Staffelzahlen $N_1$, $N_2$ paarweise teilerfremd sind, denn nur dann ist die Hochfaltung eindeutig. Eine solche Bestimmung der eindeutigen Doppler-Nummer $DN_{1/2}$ innerhalb des Geschwindigkeitsbereiches $V_{eb}$ ist vorteilhaft möglich unter Verwendung des an sich bekannten sogenannten "Chinesischen Restsatz", der auch "Chinese Remainder Theorem" oder "Chinese Algorithmus" genannt wird. Dieser ist in dem mathematischen Gebiet der Zahlentheorie bekannt, beispielsweise aus der Literaturstelle Otto Körner, "Algebra", Seite 13, Akademische Verlagsgesellschaft, Frankfurt am Main, 1974. Mit diesem Chinesischen Restsatz wird die eindeutige Doppler-Nummer $DN_{1/2}$ ermittelt entsprechend der Formel

$$DN_{1/2} = (C_1 \cdot DN_1 + C_2 \cdot DN_2) \bmod (C_3)$$

mit

$$C_1 = B_1 \cdot N_2$$
$$C_2 = B_2 \cdot N_1$$
$$C_3 = N_1 \cdot N_2,$$

wobei $B_1$, $B_2$, von $N_1$, $N_2$ abhängige feste Konstanten bedeuten und "mod" den in der Mathematik geläufigen Modulo-Operator bezeichnet. Daraus ergibt sich, daß $C_1$, $C_2$, $C_3$ ebenfalls Konstanten sind, die für vorgebene $N_1$, $N_2$ lediglich einmal bestimmt werden müssen, beispielsweise empirisch.

Bei den beschriebenen Beispielen wurde angenommen, daß zumindest eine Doppler-Nummer, hier $DN_2$, immer zuverlässig bestimmt werden kann. Ist dieses nicht immer der Fall, beispielsweise bei einer Radaranlage mit hoher Empfindlichkeit (geringer Störspannungsabstand), so ist es vorteilhaft, bei geeignet gewähltem Staffelverhältnis, die Doppler-Nummern $DN_1$ und $DN_2$ zu korrigieren und zeitlich alternierend Bursts mit mindestens drei unterschiedlichen Pulsfolgefrequenzen ($PRF_1$, $PRF_2$, $PRF_3$) auszusenden, die in einem festen vorgebbaren (Staffel)Verhältnis zueinander stehen. In einem solchen Fall werden in der beschriebenen Weise für ein Radar-Ziel immer jeweils zwei Bursts ausgewertet und dazu die eindeutige Geschwindigkeit bestimmt. Bei drei unterschiedlichen Pulsfolgefrequenzen erhält man also drei eindeutige Geschwindigkeiten. Dabei ist die Wahrscheinlichkeit sehr groß, daß immer mindestens zwei eindeutige Geschwindigkeiten gleich groß sind, innerhalb eines vorgebbaren Toleranzbereiches. Diese resultierende eindeutige Geschwindigkeit wird als richtig angenommen.

Das beschriebene Verfahren ermöglicht also vorteilhafterweise eine überaus genaue und zuverlässige Schätzung der Geschwindigkeit eines Zieles, da fehlerhafte Messungen erkannt und durch den beschriebenen Algorithmus der Korrektur der Doppler-Nummern korrigiert werden. Dabei ist die Genauigkeit der Schätzung gleich $\pm(VB_i/(2N_i))$, wobei $VB_i$ die Blindgeschwindigkeit, $N_i$ die Staffelzahl und $i$ die Burst-Nummer, welche zu der $PRF_i$ gehört, angibt.

Durch die Korrektur der Doppler-Nummern wird die Geschwindigkeit eines Zieles im PRF-Bereich für die verwendeten Bursts zuverlässig gemessen, so daß die anschließend erfolgende Hochfaltung dieser Geschwindigkeit (Doppler-Nummern Kombination) durch den Chinese-Algorithmus zu einem ebenso genauen und zuverlässigen Ergebnis im eindeutigen Geschwindigkeitsbereich $V_{eb}$ führt. Dieser ist, verglichen mit der eingangs erwähnten Formel, enorm hoch und gekennzeichnet durch die Formel

$$V_{eb(a/b)} = \pm \frac{N_b \cdot VB_a}{2 \cdot (N_b - N_a)} \, ,$$

wobei $V_{eb(a/b)}$ den zu dem Staffelverhältnis $N_a/N_b$ gehörigen Geschwindigkeits-Eindeutigkeitsbereich bedeutet und $VB_i$ ($i = a,b$) die zugehörigen Blindgeschwindigkeiten bezeichnen.

Durch die beschriebenen Algorithmen der Korrektur der Doppler-Nummern und des Chinese-Algorithmus sind vorteilhafterweise keine großen Ausblendbereiche für zweifelhafte (unsichere) Geschwindigkeitsmessungen nötig, sondern die Geschwindigkeiten werden algorithmisch zuverlässig und genau geschätzt.

Mit solchen Verfahren ist beispielsweise bei einer mittleren Pulsfolgefrequenz von ungefähr 4 kHz ein eindeutiger Geschwindigkeitsbereich von größer $\pm$ 900 m/s erreichbar bei einer hohen Güte der Schätzqualität.

## Patentansprüche

1.  Verfahren zur Ermittlung der Geschwindigkeit eines Radarzieles mittels eines Pulsdopplerradars, wobei

    -   zur Bestimmung der Eindeutigkeit der Geschwindigkeit ein Sendesignal, das aus mindestens zwei Pulsfolgen unterschiedlicher Pulsfolgefrequenzen besteht, ausgesandt wird,

    -   die zu jeder Pulsfolge gehörenden am Radarziel reflektierten Echosignale mittels einer Doppler-Filterbank, die eine vorgebbare Anzahl von Doppler-Filtern enthält, ausgewertet werden, wobei jedem Doppler-Filter ein vorgebbarer sowie möglicherweise mehrdeutiger Geschwindigkeitsbereich entspricht und

    -   aus der Kombination der zu jeder Pulsfolgefrequenz gehörenden Signale der Doppler-Filter eine eindeutige Geschwindigkeit ermittelt wird,

    -   in Abhängigkeit von einem vorgebbaren Geschwindigkeits-Eindeutigkeitsbereich ($V_{eb}$) sowie einem vorgebbaren Geschwindigkeits-Inkrement ($V_{Inkr}$) der Geschwindigkeits-Eindeutigkeitsbereich ($V_{eb}$) in eine ganzzahlige Anzahl eindeutiger Doppler-Nummern ($DN_{1/2}$), deren Breite derjenigen des Geschwindigkeits-Inkrementes ($V_{Inkr}$) entspricht, unterteilt wird,

    -   mindestens zwei zeitlich alternierend ausgesandte Pulsfolgen (Bursts) mit unterschiedlichen Pulsfolgefrequenzen ($PRF_1$, $PRF_2$) verwendet werden, wobei die Pulsfolgefrequenzen in einem festen vorgebbaren ganzzahligen Staffelverhältnis (SV) zueinander gewählt werden, jede Pulsfolgefrequenz (PRF$_1$, PRF$_2$) ein ganzzahliges Vielfaches (N$_1$, N$_2$) entsprechend dem Geschwindigkeits-Inkrement (V$_{Inkr}$) enthält, innerhalb jeder Pulsfolgefrequenz (PRF$_1$, PRF$_2$) die Geschwindigkeits-Inkremente durchnumeriert und als Doppler-Nummern (DN$_1$, DN$_2$) bezeichnet werden und der Geschwindigkeits-Eindeutigkeitsbereich (V$_{eb}$) ganzzahlige Vielfache entsprechend den Pulsfolgefrequenzen (PRF$_1$, PRF$_2$) enthält,

- zu jedem Echosignal und jeder Pulsfolgefrequenz (PRF$_1$, PRF$_2$) in der Doppler-Filterbank zumindest eine erste Filter-Nummer (FI_1) desjenigen Doppler-Filters, das den maximalen (größten) Amplitudenwert (A$_K$) enthält, ermittelt wird,

- anhand von mindestens zwei Tabellen, wobei jede Tabelle einer Pulsfolgefrequenz zugeordnet ist, eine der Nummer (FI_1) des Doppler-Filters und der Pulsfolgefrequenz zugeordnete Doppler-Nummer (DN$_1$, DN$_2$) ermittelt wird,

- zu jeder Kombination von Doppler-Nummern (DN$_1$, DN$_2$) eine zugehörige eindeutige Doppler-Nummer (DN$_{1/2}$) innerhalb des Geschwindigkeits-Eindeutigkeitsbereiches (V$_{eb}$) ermittelt wird und

- durch Multiplikation der eindeutigen Doppler-Nummer (DN$_{1/2}$) mit dem Geschwindigkeits-Inkrement (V$_{Inkr}$) die Geschwindigkeit des Radarzieles bestimmt wird, dadurch gekennzeichnet, daß fehlerhafte Doppler-Nummern (DN$_1$, DN$_2$) ermittelt werden, wobei

- zunächst die zu zwei Pulsfolgefrequenzen (PRF$_1$, PRF$_2$), denen ein Staffelverhältnis (SV) zugeordnet wird, gehörenden Doppler-Nummern (DN$_1$, DN$_2$) ermittelt werden,

- aus den Doppler-Nummern (DN$_1$, DN$_2$) eine Doppler-Nummern-Differenz (DDN) gebildet wird und

- geprüft wird, ob die Doppler-Nummern-Differenz (DDN) eine für das Staffelverhältnis (SV) gültige Doppler-Nummern-Differenz (DDN) darstellt und falls dies nicht zutrifft, zumindest eine der Doppler-Nummern (DN$_1$, DN$_2$) so korrigiert wird, daß nach der Korrektur die Doppler-Nummern-Differenz (DDN) eine für das Staffelverhältnis (SV) gültige Doppler-Nummern-Differenz (DDN) darstellt.

2. Verfahren nach Anspruch 1, dadurch gekennzeichnet, daß zur Bestimmung einer Doppler-Nummer (DN$_1$, DN$_2$)

- zusätzlich eine zweite Filter-Nummer (FI_2) desjenigen Dopplerfilters, das den zweitgrößten Amplitudenwert enthält, ermittelt wird,

- der Quotient aus dem zweitgrößten und dem maximalen (größten) Amplitudenwerten gebildet wird, und

- in einer Tabelle in Abhängigkeit von den Filter-Nummern (FI_1, FI_2) sowie dem Quotienten die Doppler-Nummer (DN$_1$, DN$_2$) ermittelt wird.

3. Verfahren nach Anspruch 1 oder Anspruch 2, dadurch gekennzeichnet, daß zu jeweils zwei Pulsfolgefrequenzen (PRF$_1$, PRF$_2$) die zugehörige Doppler-Nummern (DN$_1$, DN$_2$) ermittelt werden und daß zu dieser Kombination von Doppler-Nummern (DN$_1$, DN$_2$) die zugehörige eindeutige Doppler-Nummer (DN$_{1/2}$) mittels des Chinesischen-Restsatz-Theorems ermittelt wird.

4. Verfahren nach einem der vorhergehenden Ansprüche, dadurch gekennzeichnet, daß bei einer Doppler-Nummern-Differenz (DDN), die für das vorliegende Staffelverhältnis (SV) keine erlaubte Differenz darstellt, zumindest eine der Doppler-Nummern (DN$_1$, DN$_2$) dahingehend korrigiert wird, daß eine sich dann ergebende korrigierte Doppler-Nummern-Differenz eine erlaubte Differenz darstellt und daß die derart korrigierten Doppler-Nummern (DN$_1$, DN$_2$) für die weitere Auswertung verwendet werden.

5. Verfahren nach einem der vorhergehenden Ansprüche, dadurch gekennzeichnet, daß für ein Staffelverhältnis SV, mit SV = N$_1$ : N$_2$, N$_2$ - N$_1$ > 0 und N$_2$ - N$_1$ ungerade, bei der Korrektur mindestens einer Doppler-Nummer DN$_1$, DN$_2$ genau ±(N$_2$ - N$_1$ - 1)/2 Doppler-Nummern korrigiert werden können.

6. Verfahren nach einem der vorhergehenden Ansprüche, dadurch gekennzeichnet,

- daß mindestens drei unterschiedliche Pulsfolgefrequenzen (PRF$_1$, PRF$_2$, PRF$_3$) verwendet werden,

- daß zu jeder Pulsfolgefrequenz eine zugehörige Doppler-Nummer (DN$_1$, DN$_2$, DN$_3$) ermittelt wird,

- daß aus jeweils zwei Doppler-Nummern (DN$_1$, DN$_2$) eine eindeutige Doppler-Nummer (DN$_{1/2}$)

ermittelt wird und

- daß zu mindestens zwei gleichen eindeutigen Doppler; Nummern die zugehörige eindeutige Geschwindigkeit ermittelt wird.

7. Verfahren nach einem der vorhergehenden Ansprüche, dadurch gekennzeichnet, daß durch die Korrektur der Doppler-Nummern die Geschwindigkeit eines Zieles geschätzt wird mit einer Genauigkeit GV entsprechend der Formel

$$GV = \pm(VB_i/(2N_i)),$$

wobei

$VB_i$ die Blindgeschwindigkeit,
$N_i$ die Staffelzahl und
$i = 1, 2, 3$ die Burst-Nummer

bedeuten.

8. Verfahren nach einem der vorhergehenden Ansprüche, dadurch gekennzeichnet,

- daß durch die Korrektur der Doppler-Nummern die Geschwindigkeit eines Zieles geschätzt wird mit einer Genauigkeit GV entsprechend der Formel

$$GV = \pm(VB_i/(2N_i)),$$

wobei

$VB_i$ die Blindgeschwindigkeit,
$N_i$ die Staffelzahl und
$i = 1, 2, 3$ die Burst-Nummer

bedeuten und

- daß unter Einhaltung dieser Genauigkeit (GV) mittel des Chinese-Algorithmus eine Hochfaltung der Geschwindigkeit in den eindeutigen Geschwindigkeitsbereich $V_{eb(a:b)}$ erfolgt entsprechend der Formel

$$V_{eb(a/b)} = \pm \frac{N_b \cdot VB_a}{2 \cdot (N_b - N_a)},$$

wobei

$N_a{:}N_b$ das Staffelverhältnis SV und
$VB_i$ (i=a,b) die Blindgeschwindigkeiten bedeuten.

**Claims**

1. Method of ascertaining the speed of a radar target by means of a pulse Doppler radar, wherein

- a transmission signal, which consists of at least two pulse trains of different pulse train frequencies, is transmitted for determination of the non-ambiguity of the speed,

- the echo signals belonging to each pulse train and reflected at the radar target are evaluated by means of a Doppler filter bank which comprises a presettable number of Doppler filters, wherein a presettable and possibly ambiguous speed range corresponds to each Doppler filter

- an unambiguous speed is ascertained from the combination of the Doppler filter signals belonging to each pulse train frequency,

- in dependence on a presettable speed non-ambiguity range ($V_{eb}$) and a presettable speed increment ($V_{Inkr}$), the speed non-ambiguity range ($V_{eb}$) is subdivided into an integral number of unambiguous Doppler numbers ($DN_{1/2}$), the width of which corresponds to that of the speed increment ($V_{Inkr}$),

- at least two pulse trains (bursts) with different pulse train frequencies ($PRF_1$, $PRF_2$) and transmitted alternatingly in time are used, wherein the pulse train frequencies are selected in a fixed presettable integral number stagger ratio (SV) to one another, each pulse train frequency ($PRF_1$, $PRF_2$) comprises an integral multiple ($N_1$, $N_2$) corresponding to the speed increments ($V_{Inkr}$), within each pulse train frequency ($PRF_1$, $PRF_2$) the speed increments are numbered through and denoted as Doppler numbers ($DN_1$, $DN_2$) and the speed non-ambiguity range ($V_{eb}$) comprises integral multiples corresponding to the pulse train frequencies ($PRF_1$, $PRF_2$),

- at least one first filter number (FI_1) of that Doppler filter which has the maximum (largest) amplitude value ($A_K$) is ascertained for each echo signal and each pulse train frequency ($PRF_1$, $PRF_2$) in the Doppler filter bank,

- on the basis of at least two tables, wherein one pulse train frequency is associated with each table, one of the number (FI_1) of the Doppler filter and the Doppler number ($DN_1$, $DN_2$) associated with the pulse train frequency is ascertained,

- an associated unambiguous Doppler number ($DN_{1/2}$) within the speed non-ambiguity range ($V_{eb}$) is ascertained for each combination of Doppler numbers ($DN_1$, $DN_2$) and

- the speed of the radar target is ascertained by multiplication of the unambiguous Doppler number ($DN_{1/2}$) by the speed increment ($V_{Inkr}$),

characterised in that erroneous Doppler numbers ($DN_1$, $DN_2$) are ascertained, wherein

- initially the Doppler numbers ($DN_1$, $DN_2$) which belong to two pulse train frequencies ($PRF_1$, $PRF_2$), with which a stagger ratio (SV) is associated, are ascertained,

- a Doppler number difference (DDN) is formed from the Doppler numbers ($DN_1$, $DN_2$) and

- it is checked whether the Doppler number difference (DDN) represents a Doppler number difference (DDN) valid for the stagger ratio (SV) and in the event that this is not so at least one of the Doppler numbers ($DN_1$, $DN_2$) is so corrected that after the correction the Doppler number difference (DDN) represents a Doppler number difference (DDN) valid for the stagger ratio (SV).

2. Method according to claim 1, characterised in that for ascertaining a Doppler number ($DN_1$, $DN_2$)

- additionally a second filter number (FI_2) of that Doppler filter which has the second-largest amplitude value is ascertained,

- the quotient of the second-largest and the maximum (largest) amplitude values is formed and

- the Doppler number ($DN_1$, $DN_2$) is ascertained in a table in dependence on the filter numbers (FI_1, FI_2) as well as the quotient.

3. Method according to claim 1 or claim 2, characterised in that the associated Doppler numbers ($DN_1$, $DN_2$) are ascertained each time for two pulse train frequencies ($PRF_1$, $PRF_2$) and that the associated unambiguous Doppler number ($DN_{1/2}$) for this combination of Doppler numbers ($DN_1$, $DN_2$) is ascertained by means of the Chinese remainder theorem.

4. Method according to one of the preceding claims, characterised in that in the case of a Doppler number difference (DDN) which does not represent a permitted difference for the stagger ratio (SV) which is present, at least one of the Doppler numbers ($DN_1$, $DN_2$) is so corrected that a corrected Doppler number then resulting represents a permitted difference and that the Doppler numbers ($DN_1$, $DN_2$) corrected in that manner are used for the further evaluation.

5. Method according to one of the preceding claims, characterised in that for a stagger ratio SV, wherein $SV = N_1 : N_2$, $N_2 - N_1 > 0$ and $N_2 - N_1$ is uneven, exactly $\pm(N_2 - N_1 - 1)/2$ Doppler numbers can be corrected for the correction of at least one Doppler number $DN_1$, $DN_2$.

6. Method according to one of the preceding claims, characterised in

- that at least three different pulse train frequencies ($PRF_1$, $PRF_2$, $PRF_3$) are used,

- that an associated Doppler number ($DN_1$, $DN_2$, $DN_3$) is detected for each pulse train frequency,

- that an unambiguous Doppler number ($DN_{1/2}$) is ascertained each time from two Doppler numbers ($DN_1$, $DN_2$) and

- that the associated unambiguous speed is ascertained for at least two like unambiguous Doppler numbers.

7. Method according to one of the preceding claims, characterised in that by the correction of the Doppler numbers the speed of a target is estimated with an accuracy GV corresponding to the formula

$$GV = \pm (VB_i/(2N_i)),$$

wherein

$VB_i$ is the speed
$N_i$ is the stagger number and
$i = 1, 2, 3$ the burst number.

8. Method according to one of the preceding claims, characterised in

- that by the correction of the Doppler numbers the speed of a target is estimated with an accuracy GV corresponding to the formula

$$GV = \pm (VB_i/(2N_i)),$$

wherein

$VB_i$ is the blind speed
$N_i$ is the stagger number and

i = 1, 2, 3 the burst number and

- that with maintenance of this accuracy (GV) by means of the Chinese algorithm a high convolution of the speed in the unambiguous speed range $V_{eb(a:b)}$ is carried out in accordance with the formula

$$V_{eb(a/b)} = \pm \frac{N_b \cdot VB_a}{2 \cdot (N_b - N_a)}$$

wherein

$N_a : N_b$ is the stagger ratio SV and
$VB_i$ (i = a, b) is the blind speed.

## Revendications

1. Procédé pour déterminer la vitesse d'une cible de radar à l'aide d'un radar Doppler à impulsions, selon lequel

   - pour la détermination de l'univalence de la vitesse, un signal d'émission, qui est constitué par au moins deux suites d'impulsions ayant des fréquences différentes de récurrence des impulsions, est émis,
   - les signaux d'écho, qui font partie de chaque suite d'impulsions et sont réfléchis par la cible du radar, sont exploités au moyen d'un bloc de filtres Doppler, qui contient un nombre pouvant être prédéterminé de filtres Doppler, une gamme pour la vitesse, qui peut être prédéterminée et est éventuellement multivalente, correspondant à chaque filtre Doppler, et
   - une vitesse univalente est déterminée à partir de la combinaison des signaux, qui sont associés à chaque fréquence de récurrence d'impulsions, des filtres Doppler,
   - en fonction d'une gamme d'univalence pour la vitesse ($V_{eb}$) pouvant être prédéterminée ainsi que d'un incrément de vitesse pouvant être prédéterminé ($V_{Inkr}$), la gamme d'univalence pour la vitesse ($V_{eb}$) peut être subdivisée en un nombre entier de nombres Doppler univalents ($DN_{1/2}$), dont l'amplitude correspond à celle de l'incrément de vitesse ($V_{Inkr}$),
   - au moins deux suites d'impulsions (salves) émises d'une manière alternée dans le temps et possédant des fréquences différentes de récurrence d'impulsions ($PRF_1$, $PRF_2$) sont utilisées, les fréquences de récurrence d'impulsions étant choisies de manière à définir entre elles un rapport entier fixe d'échelonnement pouvant être prédéterminé (SV), chaque fréquence de récurrence d'impulsions ($PRF_1$,

$PRF_2$) contenant un multiple entier ($N_1$, $N_2$) de l'incrément de vitesse ($VInkr$), les incréments de vitesse étant numérotés continûment pour chaque fréquence de récurrence d'impulsions ($PRF_1$, $PRF_2$) et étant désignés en tant que nombres Doppler ($DN_1$, $DN_2$), et la gamme d'univalence pour la vitesse ($V_{eb}$) contenant des multiples entiers correspondant aux fréquences de récurrence d'impulsions ($PRF_1$, $PRF_2$),

   - pour chaque signal d'écho et chaque fréquence de récurrence d'impulsions ($PRF_1$, $PRF_2$), un premier numéro de filtre (FI_1) du filtre Doppler, qui contient la valeur d'amplitude maximale (la plus élevée) ($A_K$), est déterminé dans le bloc de filtres Doppler,
   - un nombre Doppler ($DN_1$, $DN_2$), qui est associé au nombre (FI_1) du filtre Doppler et à la fréquence de récurrence d'impulsions, est déterminé sur la base d'au moins deux tableaux, dont chacun est associé à une fréquence de récurrence d'impulsions,
   - un nombre Doppler univalent associé ($DN_{1/2}$) est déterminé, pour chaque combinaison de nombres Doppler ($DN_1$, $DN_2$), à l'intérieur de la gamme d'univalence pour la vitesse ($V_{eb}$),
   - la vitesse de la cible du radar est déterminée par multiplication du nombre Doppler univalent ($DN_{1/2}$) par l'incrément de vitesse ($V_{Inkr}$),

   caractérisé en ce que des nombres Doppler ($DN_1$, $DN_2$) erronés sont déterminés, auquel cas

   - tout d'abord les nombres Doppler ($DN_1$, $DN_2$), qui sont associés à deux fréquences de récurrence d'impulsions ($PRF_1$, $PRF_2$), auxquelles est associé un rapport d'échelonnement (SV), sont déterminés,
   - une différence (DDN) de nombres Doppler est formée à partir des nombres Doppler ($DN_1$, $DN_2$), et
   - un contrôle est effectué pour déterminer si la différence (DDN) des nombres Doppler représente une différence (DDN) des nombres Doppler, qui est valable pour le rapport d'échelonnement (S2) et, si ce n'est pas le cas, au moins l'un des nombres Doppler ($DN_1$, $DN_2$) est corrigé de telle sorte qu'après la correction, la différence (DDN) des nombres Doppler représente une différence (DDN) des nombres Doppler, qui est valable pour le rapport d'échelonnement (SV).

2. Procédé selon la revendication 1, caractérisé en ce que pour la détermination d'un nombre Doppler ($DN_1$, $DN_2$)

   - un deuxième numéro de filtre (FI_2) du filtre Doppler, qui contient la valeur d'amplitude maximale en second, est déterminé en supplément,

- le quotient entre la valeur d'amplitude maximale en second et la valeur d'amplitude maximale (la plus élevée) est formé, et
- le nombre Doppler ($DN_1$, $DN_2$) est déterminé dans un tableau en fonction des numéros de filtre (FI_1, FI_2) ainsi que du quotient.

3. Procédé selon la revendication 1 ou la revendication 2, caractérisé en ce que les nombres Doppler associés ($DN_1$, $DN_2$) sont déterminés pour deux fréquences respectives de récurrence d'impulsions ($PRF_1$, $PRF_2$) et que les nombres Doppler univalents associés ($DN_1$, $DN_2$) sont déterminés au moyen du théorème des restes chinois est déterminé pour cette combinaison de nombres Doppler ($DN_1$, $DN_2$).

4. Procédé selon l'une des revendications précédentes, caractérisé en ce que dans le cas d'une différence (DDN) des nombres Doppler, qui ne représente pas une différence autorisée pour le présent rapport d'échelonnement (SV), au moins l'un des nombres Doppler ($DN_1$, $DN_2$) est corrigé en ce sens qu'une différence corrigée des nombres Doppler, que l'on obtient alors, représente une différence autorisée et que les nombres Doppler ($DN_1$, $DN_2$) corrigés de cette manière sont utilisés pour la suite de l'exploitation.

5. Procédé selon l'une des revendications précédentes, caractérisé en ce que pour un rapport d'échelonnement autorisé avec VS = $N_1$ : $N_2$, $N_2$ - $N_1$ > 0 et $N_2$ - $N_1$ impair, lors de la correction d'au moins un nombre Doppler ($DN_1$, $DN_2$), on peut corriger de façon précise $\pm(N_2 - N_1 - 1)/2$ nombres Doppler.

6. Procédé selon l'une des revendications précédentes, caractérisé en ce

- qu'au moins trois fréquences différentes de récurrence d'impulsions ($PRF_1$, $PRF_2$, $PRF_3$) sont utilisées,
- qu'un nombre Doppler associé ($DN_1$, $DN_2$, $DN_3$) est déterminé pour chaque fréquence de récurrence d'impulsions,
- qu'un nombre Doppler univalent ($DN_{1/2}$) est déterminé à partir de deux nombres Doppler respectifs ($DN_1$, $DN_2$), et
- que la vitesse univalente associée est déterminée pour au moins deux nombres Doppler univalents identiques.

7. Procédé selon l'une des revendications précédentes, caractérisé en ce que la vitesse d'une cible est estimée, grâce à la correction des nombres Doppler, avec une précision GV correspondant à la formule

$$GV = \pm(VB_i/(2N_i)),$$

dans laquelle

$VB_i$ est la vitesse fictive,
$N_I$ est le rapport d'échelonnement et
i = 1, 2, 3 est le nombre de salves

8. Procédé selon l'une des revendications précédentes, caractérisé en ce

- que la vitesse d'une cible est estimée grâce à la correction des nombres Doppler, avec une précision GV correspondant à la formule

$$GV = \pm(VB_i/(2N_i)),$$

dans laquelle

$VB_i$ est la vitesse fictive
$N_I$ est le rapport d'échelonnement et
i = 1, 2, 3 est le nombre de salves, et

- tout en conservant cette précision (GV), une convolution montante de la vitesse est exécutée à l'aide de l'algorithme chinois dans la gamme univalente pour la vitesse $V_{eb(a:b)}$ conformément à la formule :

$$V_{eb(a/b)} = \pm \frac{N_b \cdot VB_a}{2.(N_b - N_a)}$$

dans laquelle

$N_a:N_b$ est le rapport d'échelonnement SV et
$VB_i$ (i=a,b) désigne les vitesses fictives.

DN−Kombination
2/3

$V_{Inkr}$

Burst 1 | 1 | 2 | 3 | 1 | 2 | 3 | 1 | 2 | 3 | 1 | 2 | 3 | 1 | 2 | 3 |—$DN_1$

0 | | $PRF_1$ | $2PRF_1$ | $3PRF_1$ | $4PRF_1$ | $5PRF_1$

0 | | $PRF_2$ | | $2PRF_2$ | | $3PRF_2$

Burst 2 | 1 | 2 | 3 | 4 | 5 | 1 | 2 | 3 | 4 | 5 | 1 | 2 | 3 | 4 | 5 |—$DN_2$

| 0 | 0 | 0 | −3 | −3 | 2 | −1 | −1 | −1 | −4 | 1 | 1 | −2 | −2 | −2 |—$DDN = DN_1 − DN_2$

Geschwindigkeit

0   2   4   6   8   10   12   $V_{eb}$   Frequenz

12